# FASCICULE DE BREVET EUROPEEN

(11) **EP 3 023 295 B1**
(45) Date de publication et mention de la délivrance du brevet: **10.10.2018**
(21) Numéro de dépôt: 15192961.9
(22) Date de dépôt: 04.11.2015
(51) Int. Cl.: B60N 2/30, B60N 2/015

(54) **SIEGE DE VEHICULE AUTOMOBILE MUNI D'UNE ASSISE RABATTABLE VERS LE DOSSIER**
KRAFTFAHRZEUGSITZ, DER MIT EINER ZUR RÜCKENLEHNE HOCHKLAPPBAREN SITZFLÄCHE AUSGESTATTET IST
MOTOR VEHICLE SEAT PROVIDED WITH A SEAT PORTION THAT CAN FOLD TOWARDS THE BACKREST

(30) Priorité: 19.11.2014 FR 1461180
(43) Date de publication de la demande: 25.05.2016
(73) Titulaire: PSA Automobiles SA, 78300 Poissy (FR)
(72) Inventeur: BERTIN, FREDERIC, 78340 LES CLAYES SOUS BOIS (FR); JOUANNY, THIERRY, 92250 LA GARENNE COLOMBES (FR); GEORGE, VINCENT, 28700 BEVILLE LE COMTE (FR); DECOMBE, FRANCOIS, 42290 SORBIERS (FR); REOLON, CHRISTEL, 42100 SAINT-ETIENNE (FR)

(56) Documents cités:
- EP-A1- 1 481 840
- FR-A1- 2 962 388
- US-A- 3 594 037

## Description

### Domaine de l'invention

La présente invention a trait d'une manière générale au domaine des sièges de véhicules automobiles. Elle concerne en particulier un tel siège muni d'une assise rabattable vers le dossier.

### Arrière-plan de l'invention

De nos jours, l'habitacle des véhicules se doit d'être de plus en plus modulable afin de répondre à l'ensemble des besoins des utilisateurs (transport de passagers, de marchandises, ou les deux à la fois).

Pour ce faire, certains sièges du véhicule sont aptes à passer d'une première position de service destinée à l'accueil des passagers avec un confort maximal, à une seconde position de rangement dans laquelle le volume du siège est minimisé de sorte que le véhicule puisse transporter un maximum de marchandises. Il est connu dans l'art antérieur de tels sièges dont le dossier peut être rabattu sur l'assise de manière à libérer un espace en hauteur. Le chargement des marchandises s'effectuant sur le dossier, leur stabilité est bien inférieure à celle de marchandises posées directement sur le plancher du véhicule. Par ailleurs, le dossier peut être endommagé par les marchandises notamment lorsque ces dernières sont lourdes.

Afin de palier à ces inconvénients, on connaît également des sièges dont l'assise peut être rabattue vers le dossier de la même manière qu'un fauteuil de cinéma de sorte à libérer de l'espace au niveau du plancher.

Cependant, lors de fortes décélérations du véhicule causées par des freinages appuyés, l'assise du siège peut se déplier spontanément vers l'avant et abimer les marchandises stockées en dessous.

Pour éviter ce phénomène, il est connu de verrouiller mécaniquement l'assise en position rabattue vers le dossier.

La demande de brevet européenne EP 1 481 840 décrit un véhicule automobile comprenant un siège muni d'un dossier disposé dans une position d'utilisation, d'une assise montée pivotante par rapport au dossier autour d'un axe de pivotement transversal, et de moyens d'actionnement de l'assise en rotation autour de l'axe de pivotement. Les moyens d'actionnement comprennent un organe d'actionnement monté pivotant sur l'assise autour d'un axe d'articulation d'assise transversal , l'organe d'actionnement étant monté pivotant par rapport au dossier autour d'un axe d'articulation de dossier transversal et monté coulissant par rapport à ce dossier. Dans une position relevée, l'assise est rabattue contre le dossier, à l'aide d'un vérin pneumatique sur un des côtés latéraux de l'assise.

La demande de brevet des états unis US 3 594 037 décrit un siège de cabine ayant un profil mince et compact, apte à se plier automatiquement dans un bâti. Il comporte une assise basculante apte à passer d'une position verticale vers une position horizontale et un dossier se déplaçant vers l'avant du siège dans un mouvement simultané. En position relevée, l'assise vient se plaquer contre le dossier. Un vérin exerce un effort de traction sur l'assise pour la pivoter afin qu'elle se bloque dans le bâti.

La demande de brevet européenne EP 1 406 786 décrit ainsi un siège comprenant un dossier solidaire d'un bâti, une assise repliable, une béquille rabattable contre l'assise, ainsi qu'un mécanisme de verrouillage apte à maintenir l'assise en position repliée lorsque la béquille est rabattue contre l'assise. Ce mécanisme est commandé par la béquille de sorte que lorsque cette dernière est mise en position de support (c'est-à-dire substantiellement perpendiculaire à l'assise), celui-ci est libéré afin de permettre le déploiement de l'assise.

La demande de brevet française FR 2 979 295 décrit un autre type de siège dont le dossier est monté mobile sur un bâti du véhicule entre une position basse et une position haute. Ce siège comprend en outre des moyens de verrouillage agencés pour être mis en butée sur le bâti lorsque le dossier est en position haute de sorte à maintenir l'assise en position repliée contre le dossier.

La réglementation imposant à ces mécanismes de verrouillage de résister à des décélérations pouvant aller jusqu'à 20g, ces derniers doivent être dimensionnés en conséquence ce qui engendre malheureusement des surcoûts importants pour le siège.

### Objet et résumé de l'invention

La présente invention vise donc à fournir une solution alternative à la fois simple et économique pour éviter que l'assise du siège ne se déplie spontanément vers l'avant en cas de fortes décélérations du véhicule.

Elle propose à cet effet, un siège de véhicule automobile comportant un dossier destiné à être fixé au plancher dudit véhicule, ainsi qu'une assise articulée à pivotement sur ledit dossier autour d'un axe transversal entre une configuration abaissée dans laquelle elle est apte à accueillir un passager et une configuration relevée dans laquelle elle est rabattue vers ledit dossier, comportant un vérin pneumatique agencé sur l'un des côtés latéraux dudit siège et apte à retenir ladite assise dans ladite configuration relevée à l'encontre d'un seuil prédéterminé de décélération subie par le dit siège,et en ce que ledit vérin forme une butée de fin de course pour ladite assise, ladite configuration relevée de ladite assise correspondant à la position d'extension maximale dudit vérin.

Le fait de disposer un tel vérin pneumatique retenant l'assise en configuration relevée permet d'éviter que cette dernière ne se déplie spontanément vers l'avant en cas de forte décélération du véhicule causée par un freinage appuyé.

En outre, ne s'agissant pas d'un mécanisme de verrouillage, ce vérin n'est donc pas soumis à l'obligation réglementaire d'assurer la retenue de l'assise sous une décélération pouvant atteindre 20g (une telle décélération ne se rencontrant qu'en cas de choc du véhicule à très grande vitesse). Ce vérin et les éléments de fixation de ce dernier sur le siège n'ont donc pas besoin d'être surdimensionnés pour répondre à ce critère, de sorte que le siège selon l'invention présente un coût de revient particulièrement raisonnable lui permettant d'être monté sur l'ensemble des modèles de véhicules d'un constructeur automobile, y compris ceux d'entrée de gamme.

Selon des caractéristiques préférées du siège selon l'invention, prises seules ou en combinaison :
- ledit seuil prédéterminé de décélération est compris entre 1,5 et 2g ;
- les caractéristiques dudit vérin et son positionnement sont prédéterminés de sorte que le moment de rotation qu'il exerce sur ladite assise dans sa configuration abaissée compense la majeure partie des moments de rotation s'exerçant dans le sens contraire sur cette assise du fait de son poids et des forces de frottement ;
- ;
- une première extrémité dudit vérin est reliée audit dossier tandis que sa seconde extrémité est reliée à ladite assise ;
- ledit vérin comporte une tige de piston montée mobile dans un corps, ladite première extrémité dudit vérin reliée audit dossier étant celle constituée par l'extrémité dudit corps opposée à ladite tige, tandis que ladite seconde extrémité dudit vérin reliée à ladite assise est celle constituée par l'extrémité de ladite tige opposée audit corps ;
- les première et seconde extrémités dudit vérin sont reliées respectivement à ladite assise et audit dossier par des articulations de type rotule ;
- ledit siège comporte deux dits vérins pneumatiques agencés chacun sur un côté latéral correspondant de ce siège ; et/ou
- ledit siège comporte une béquille de verrouillage montée articulée sur ladite assise et comprenant des moyens de verrouillage aptes à coopérer, lorsque ledit siège occupe ladite configuration abaissée, avec des éléments solidaires dudit plancher de sorte à verrouiller ladite assise sur ledit plancher.

L'invention vise également sous un deuxième aspect, un véhicule automobile comportant un tel siège.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue en perspective d'une banquette d'un véhicule automobile comprenant un siège à assise rabattable selon l'invention ;
- la figure 2 représente une vue de côté du siège selon l'invention sur laquelle l'assise occupe sa configuration abaissée dans laquelle elle est apte à accueillir un passager ;
- la figure 3 représente un agrandissement de la zone III de la figure 2 ;
- la figure 4 représente une vue de côté du siège selon l'invention sur laquelle l'assise occupe sa configuration relevée dans laquelle elle est rabattue vers le dossier ; et
- la figure 5 représente un agrandissement de la zone V de la figure 4.

### Description détaillée d'un mode de réalisation

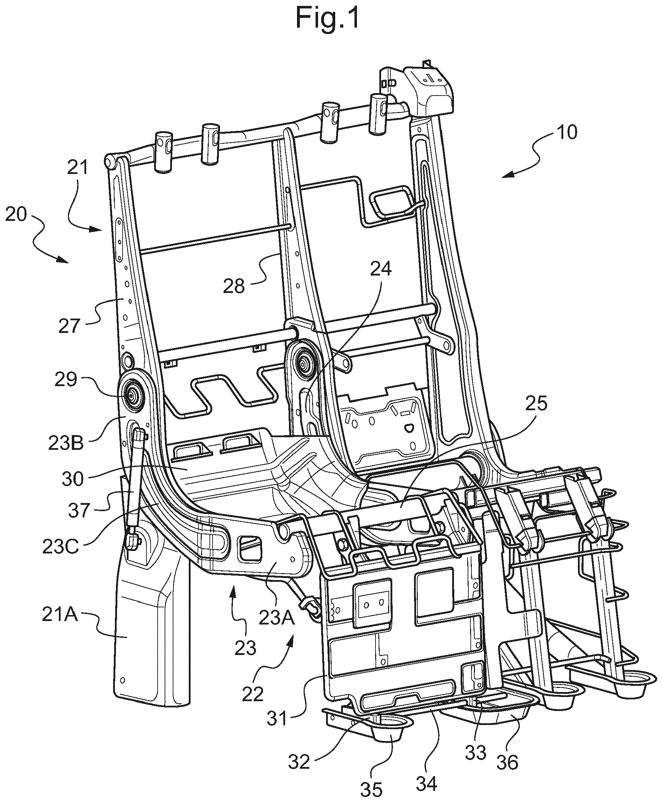

La figure 1 représente une banquette avant de véhicule automobile comportant un siège fixe 10 accolé à un siège à assise rabattable 20 selon l'invention.

Le siège 20 comporte un dossier 21 destiné à être fixé au plancher d'un véhicule automobile par au moins un pied de fixation 21A, et une assise 22 articulée à pivotement sur ce dossier 21 entre une configuration abaissée dans laquelle elle est apte à accueillir un passager et une configuration relevée dans laquelle elle est rabattue vers le dossier 21.

L'assise 22 comporte deux flaques métalliques latéraux 23, 24 en forme de crosses de hockey.

Chaque flasque 23, 24 comprend une branche principale 23A, une branche d'articulation 23B s'étendent de manière sensiblement perpendiculaire à la branche principale 23A et un tronçon courbe de liaison 23C reliant la branche principale 23A à la branche d'articulation 23B.

Comme illustré sur la figure 1, les extrémités libres des deux branches principales 23A sont reliées entre elles par un tube métallique transversal 25, tandis que les branches d'articulation 23B sont respectivement montées articulées sur les deux flasques latéraux 27, 28 du dossier 21 selon un axe de pivotement transversal 29.

L'assise 22 comporte également un baquet de soutènement 30 s'étendant entre les deux tronçons de liaison courbes 23C des flasques 23, 24.

Ce baquet 30 qui est de préférence réalisé dans un matériau métallique, peut également être obtenu par moulage à partir d'un polymère thermoplastique tel que de l'ABS (acrylonitrile butadiène styrène), ce dernier ayant pour avantage d'être à la fois léger et de présenter une bonne tenue aux chocs.

Comme illustré sur la figure 1, une béquille de verrouillage 31 est en outre montée articulée à pivotement sur le tube transversal 25 de l'assise 22. Cette béquille 31 comprend des crochets de verrouillage 32, 33 destinés, lorsque l'assise 22 occupe sa configuration abaissée, à coopérer avec des fils métalliques 34 solidaires de deux coupelles métalliques 35, 36 fixées au plancher du véhicule, de sorte à verrouiller cette assise dans cette configuration abaissée.

Selon l'invention, l'un des côtés latéraux du siège 20 comporte également un vérin pneumatique 37 destiné à maintenir l'assise 22 dans sa configuration relevée.

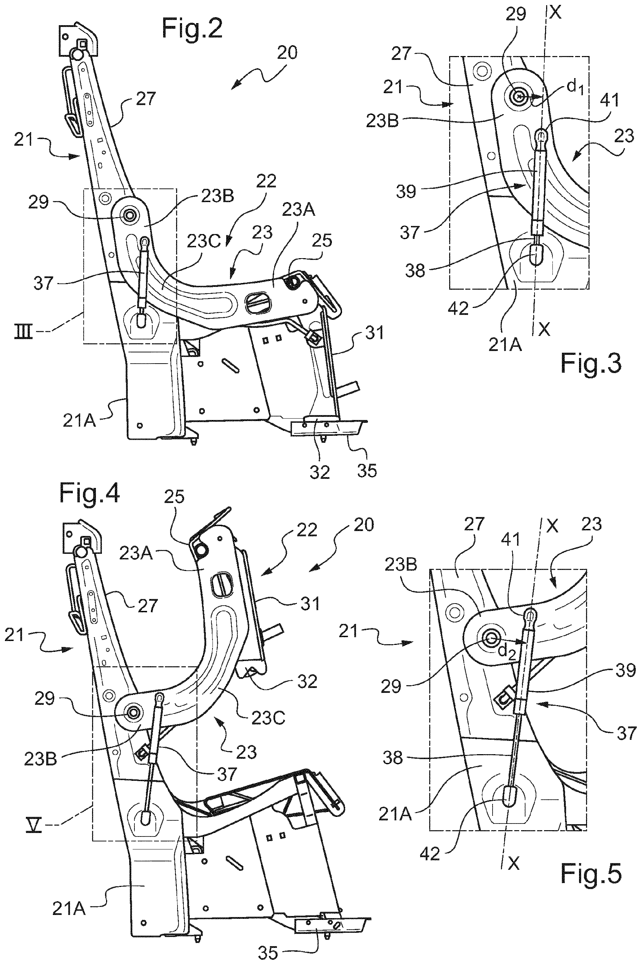

Ce vérin comporte classiquement une tige de piston 38 montée mobile dans un corps cylindrique 39. Une première extrémité du vérin 37 (de préférence, celle constituée par l'extrémité du corps 39 opposée à la tige 38) est reliée à la branche d'articulation 23B du flasque latéral correspondant 23 de l'assise 22 par une articulation 41 de type rotule (figures 3 et 5).

La seconde extrémité du vérin 37 (de préférence, celle constituée par l'extrémité de la tige de piston 38 opposée au corps 39) est quant à elle reliée au pied de fixation 21A du dossier 21 par une articulation 42, également de type rotule.

On va maintenant décrire le fonctionnement du siège 20 selon l'invention à l'appui des figures 2 à 5.

La figure 2 montre le siège 20 avec l'assise 22 qui occupe sa configuration abaissée dans laquelle elle est apte à accueillir un passager.

Dans cette configuration, la béquille 31 est déployée : cette dernière étant en outre fixée au plancher du véhicule par l'intermédiaire de ses crochets 32, 33 qui sont verrouillés sur les fils métalliques 34.

Le vérin 37, ici sa position de compression maximale, exerce un moment de rotation par rapport à l'axe de pivotement 29 de l'assise 22 sollicitant cette dernière en rotation vers sa configuration relevée. L'intensité de ce moment est d'autant plus importante que la distance entre cet axe de pivotement 29 et l'axe x-x du vérin 37 est grande.

Lorsque le l'utilisateur souhaite positionner l'assise 22 du siège 20 dans sa configuration relevée afin de gagner de l'espace de rangement, celui-ci doit préalablement déverrouiller les deux crochets 32, 33 des fils 34 en tirant sur une sangle (non visible sur les dessins), de sorte à désolidariser la béquille 31 du plancher du véhicule.

Il peut alors relever et faire pivoter sans effort l'assise 22 autour de l'axe 29, jusqu'à ce que le vérin 37 arrive en position d'extension maximale : le siège 20 occupe alors sa configuration relevée illustrée par la figure 4. Au cours de ce mouvement, la béquille 31 pivote librement autour du tube transversal 25 de sorte à se rabattre verticalement contre l'assise 22.

Le fait que la course de l'assise 22 soit limitée par le vérin 37 permet d'empêcher, lorsque le siège occupe cette configuration relevée, que la garniture de cette assise ne comprime la garniture du dossier et n'entraine à la longue des marques disgracieuses sur ce dernier.

On notera également que les caractéristiques du vérin 37 (notamment la surface de son piston et la pression de l'air) ainsi que son positionnement (en particulier la distance d₁ entre l'axe du vérin 37 et l'axe de pivotement 29 lorsque l'assise 22 occupe sa configuration abaissée) sont de préférence déterminées de manière à ce que le moment de rotation qu'il exerce sur l'assise 22 dans cette configuration abaissée compense la majeure partie des moments de rotation s'exerçant dans le sens contraire sur cette assise du fait de son poids et des forces de frottement ; de sorte à minimiser l'effort initial de levage devant être effectué par l'utilisateur.

En outre, la distance d₂ entre l'axe du vérin 37 et l'axe de pivotement 29 lorsque l'assise 22 occupe sa configuration relevée (voir figure 5) ainsi que les caractéristiques de ce vérin 37 (surface du piston et pression exercée) sont déterminées de manière à ce que le moment de rotation qu'il exerce sur l'assise 22 dans cette configuration relevée soit suffisant pour empêcher son basculement vers l'avant lorsque le siège est soumis à une décélération inférieure ou égale à une valeur seuil prédéterminée.

Cette valeur seuil est de préférence comprise entre 1,5 et 2g, ce qui permet d'assurer la retenue de l'assise dans sa configuration relevée en cas de freinage d'urgence du véhicule.

Selon des variantes de réalisation non représentées, le siège comporte deux vérins pneumatiques agencés respectivement sur un côté latéral correspondant de ce siège.

Selon d'autres variantes de réalisation non représentées, le siège ne comporte pas de béquille telle que 31.

Bien entendu, la présente invention ne se limite pas aux formes de réalisation décrites et représentées, mais englobe également toutes les variantes d'exécution à la portée de l'homme du métier.

## Revendications

1. Siège de véhicule automobile comportant un dossier (21) destiné à être fixé au plancher dudit véhicule, ainsi qu'une assise (22) articulée à pivotement sur ledit dossier (21) autour d'un axe transversal (29) entre une configuration abaissée dans laquelle elle est apte à accueillir un passager et une configuration relevée dans laquelle elle est rabattue vers ledit dossier (21) ; **caractérisée en ce qu'**il comporte un vérin pneumatique (37) agencé sur l'un des côtés latéraux dudit siège et apte à retenir ladite assise (22) dans ladite configuration relevée à l'encontre d'un seuil prédéterminé de décélération subie par le dit siège et **en ce que** ledit vérin (37) forme une butée de fin de course pour ladite assise (22), ladite configuration relevée de ladite assise (22) correspondant à la position d'extension maximale dudit vérin (37).

2. Siège de véhicule automobile selon la revendication 1, **caractérisé en ce que** ledit seuil prédéterminé de décélération est compris entre 1,5 et 2g.

3. Siège de véhicule automobile selon l'une des revendications 1 ou 2, **caractérisé en ce que** les caractéristiques dudit vérin (37) et son positionnement sont prédéterminés de sorte que le moment de rotation qu'il exerce sur ladite assise (22) dans sa configuration abaissée compense la majeure partie des moments de rotation s'exerçant dans le sens contraire sur cette assise (22) du fait de son poids et des forces de frottement.

4. Siège de véhicule automobile selon l'une des revendications 1 à 3, **caractérisé en ce qu'**une première extrémité dudit vérin (37) est reliée audit dossier (21) tandis que sa seconde extrémité est reliée à ladite assise (22).

5. Siège de véhicule automobile selon la revendication 4, **caractérisé en ce que** ledit vérin (37) comporte une tige de piston (38) montée mobile dans un corps (39), ladite première extrémité dudit vérin (37) reliée audit dossier (21) étant celle constituée par l'extrémité dudit corps (39) opposée à ladite tige (38), tandis que ladite seconde extrémité dudit vérin (37) reliée à ladite assise (22) est celle constituée par l'extrémité de ladite tige (38) opposée audit corps (39).

6. Siège de véhicule automobile selon l'une des revendications 4 ou 5, **caractérisé en ce que** les première et seconde extrémités dudit vérin (37) sont reliées respectivement à ladite assise (22) et audit dossier (21) par des articulations de type rotule (41, 42).

7. Siège de véhicule automobile selon l'une des revendications 1 à 6, **caractérisé en ce qu'**il comporte deux dits vérins pneumatiques (37) agencés chacun sur un côté latéral correspondant de ce siège.

8. Siège de véhicule automobile selon l'une des revendications 1 à 7, **caractérisé en ce qu'**il comporte une béquille de verrouillage (31) montée articulée sur ladite assise (22) et comprenant des moyens de verrouillage (32, 33) aptes à coopérer, lorsque ledit siège occupe ladite configuration abaissée, avec des éléments (35, 36) solidaires dudit plancher de sorte à verrouiller ladite assise (22) sur ledit plancher.

9. Véhicule automobile comprenant un siège selon l'une des revendications 1 à 8.

## Patentansprüche

1. Kraftfahrzeugsitz, der eine Rückenlehne (21) umfasst, die dazu bestimmt ist, an dem Boden des Fahrzeugs befestigt zu sein, sowie eine Sitzfläche (22), die schwenkend auf der Rückenlehne (21) um eine Querachse (29) zwischen einer heruntergeklappten Konfiguration, in der sie geeignet ist, um einen Fahrgast aufzunehmen, und einer hochgeklappten Konfiguration, in der sie zu der Rückenlehne (21) zurückgeklappt ist, angelenkt ist, **dadurch gekennzeichnet, dass** er einen Druckluftzylinder (37) umfasst, der auf einer der seitlichen Seiten des Sitzes eingerichtet und geeignet ist, die Sitzfläche (22) in der hochgeklappten Konfiguration gegen einen vorbestimmten Schwellenwert an Verlangsamung, die der Sitz erfährt, zurückzuhalten, und dass der Zylinder (37) einen Endanschlag für die Sitzfläche (22) bildet, wobei die hochgeklappte Konfiguration der Sitzfläche (22) der maximalen Streckungsposition des Zylinders (37) entspricht.

2. Kraftfahrzeugsitz nach Anspruch 1, **dadurch gekennzeichnet, dass** der vorbestimmte Verlangsamungsschwellenwert zwischen 1,5 und 2 g liegt.

3. Kraftfahrzeugsitz nach einem der Ansprüche 1 oder 2, **dadurch gekennzeichnet, dass** die Merkmale des Zylinders (37) und seine Positionierung derart vorbestimmt sind, dass das Drehmoment, das er auf die Sitzfläche (22) in ihrer heruntergeklappten Konfiguration ausübt, den Großteil der Drehmomente ausgleicht, die in die entgegengesetzte Richtung auf diese Sitzfläche (22) aufgrund ihres Gewichts und der Reibungskräfte ausgeübt werden.

4. Kraftfahrzeugsitz nach einem der Ansprüche 1 bis 3, **dadurch gekennzeichnet, dass** ein erstes Ende des Zylinders (37) mit der Rückenlehne (21) verbunden ist, während sein zweites Ende mit der Sitzfläche (22) verbunden ist.

5. Kraftfahrzeugsitz nach Anspruch 4, **dadurch gekennzeichnet, dass** der Zylinder (37) einen Kolbenschaft (38) umfasst, der beweglich in einem Körper (39) montiert ist, wobei das erste Ende des Zylinders (37), das mit der Rückenlehne (21) verbunden ist, dasjenige ist, das von dem Ende des Körpers (39) gebildet wird, das dem Schaft (38) entgegengesetzt ist, während das zweite Ende des Zylinders (37), das mit der Sitzfläche (22) verbunden ist, dasjenige ist, das von dem Ende des Schafts (38), das dem Körper (39) entgegengesetzt ist, gebildet wird.

6. Kraftfahrzeugsitz nach einem der Ansprüche 4 oder 5, **dadurch gekennzeichnet, dass** das erste und das zweite Ende des Zylinders (37) jeweils mit der Sitzfläche (22) und der Rückenlehne (21) durch Anlenkungen vom Typ Kugelgelenk (41, 42) verbunden sind.

7. Kraftfahrzeugsitz nach einem der Ansprüche 1 bis 6, **dadurch gekennzeichnet, dass** er zwei Druckluftzylinder (37) umfasst, die jeweils auf einer seitlichen Seite, die diesem Sitz entspricht, eingerichtet sind.

8. Kraftfahrzeugsitz nach einem der Ansprüche 1 bis 7, **dadurch gekennzeichnet, dass** er einen Verriegelungsständer (31) umfasst, der auf der Sitzfläche (22) angelenkt montiert ist, und Verriegelungsmittel (32, 33) umfasst, die geeignet sind, um, wenn der Sitz die heruntergeklappte Konfiguration belegt, mit Elementen (35, 36) zusammenzuwirken, die fest mit dem Boden verbunden sind, so dass die Sitzfläche (22) auf dem Boden verriegelt ist.

9. Kraftfahrzeug, das einen Sitz nach einem der Ansprüche 1 bis 8 umfasst.

## Claims

1. A motor vehicle seat comprising a backrest (21) intended to be fixed to the floor of said vehicle, and also a seating surface (22) pivotably articulated on said backrest (21) about a transverse axis (29) between a lowered configuration, in which it is able to receive a passenger, and a raised configuration, in which it is folded towards said backrest (21); **characterized in that** it comprises a pneumatic jack (37) arranged on one of the lateral sides of said seat and able to maintain said seating surface (22) in said raised configuration counter to a predetermined deceleration threshold undergone by said seat and **in that** said jack (37) forms an end travel stop for said seating surface (22), said raised configuration of said seating surface (22) corresponding to the maximum extension position of said jack (37).

2. The motor vehicle seat according to Claim 1, **characterized in that** said predetermined deceleration threshold is comprised between 1.5 and 2 g.

3. The motor vehicle seat according to one of Claims 1 or 2, **characterized in that** the characteristics of said jack (37) and its positioning are predetermined such that the moment of rotation which it exerts on said seating surface (22) in its lowered configuration compensates the major portion of the moments of rotation acting in the opposite direction on this seating surface (22) owing to its weight and frictional forces.

4. The motor vehicle seat according to one of Claims 1 to 3, **characterized in that** a first end of said jack (37) is connected to said backrest (21), whereas its second end is connected to said seating surface (22).

5. The motor vehicle seat according to Claim 4, **characterized in that** said jack (37) comprises a piston rod (38), movably mounted in a body (39), said first end of said jack (37) connected to said backrest (21) being that constituted by the end of said body (39) opposed to said rod (38), whereas said second end of said jack (37) connected to said seating surface (22) is that constituted by the end of said rod (38) opposed to said body (39).

6. The motor vehicle seat according to one of Claims 4 or 5, **characterized in that** the first and second ends of said jack (37) are connected respectively to said seating surface (22) and to said backrest (21) by articulations of the ball type (41, 42).

7. The motor vehicle seat according to one of Claims 1 to 6, **characterized in that** it comprises two said pneumatic jacks (37) each arranged on a corresponding lateral side of this seat.

8. The motor vehicle seat according to one of Claims 1 to 7, **characterized in that** it comprises a locking crutch (31) articulatedly mounted on said seating surface (22) and including locking means (32, 33) able to cooperate, when said seat occupies said lowered configuration, with elements (35, 36) integral with said floor, so as to lock said seating surface (22) on said floor.

9. A motor vehicle including a seat according to one of Claims 1 to 8.
